# EUROPÄISCHE PATENTANMELDUNG

(11) **EP 0 919 702 A2**
(43) Veröffentlichungstag der Anmeldung: **02.06.1999**
(21) Anmeldenummer: 98119867.4
(22) Anmeldetag: 20.10.1998
(51) Int. Cl.: F01N 3/20, B01D 53/94

(54) **Process for reducing the NOx content of Diesel engine exhaust gas**

(30) Priorität: 07.11.1997 DE 19749400
(71) Anmelder: SIEMENS AKTIENGESELLSCHAFT, 80333 München (DE)
(72) Erfinder: Wissler, Gerhard Dr., 93104 Sünching (DE); Hofmann, Lothar, 96264 Altenkunstadt (DE); Pajonk, Günther Dr., 96199 Zapfendorf (DE); Weigl, Manfred, 93161 Viehhausen (DE)

(57) **Zusammenfassung**

Bei einer Dieselbrennkraftmaschine mit katalytischer Abgasbehandlung nach dem SCR-Prinzip wird aus dem für die Dosierung des Reduktionsmittels berechneten Katalysatorwirkungsgrad von einem Steuergerät ein zu hoher NO_{X}-Ausstoß erkannt und dann Maßnahmen wie verzögerter Beginn der Kraftstoffeinspritzung, Deaktivieren einer Schubabschaltung, Verringern einer Abgasrückführrate und/oder Erhöhen der Leerlaufdrehzahl eingeleitet. Dadurch sinkt der NO_{X}-Gehaltes im unbehandelten Abgas, die Katalysatortemperatur (C) steigt nach einem Kaltstart schneller an und der NO_{X}-Ausstoß wird reduziert.

## Beschreibung

Die Erfindung betrifft ein Verfahren zur Verringerung des NO_{X}-Gehaltes im Abgas einer Dieselbrennkraftmaschine gemäß dem Oberbegriff des Anspruchs 1.

Zur Verringerung des NO_{X}-Gehaltes im Abgas einer Dieselbrennkraftmaschine ist das sogenannte Selective-Catalytic-Reduction-Verfahren bekannt. Dabei wird an einer Stelle vor einem Katalysator ein Reduktionsmittel in das Abgas eingespritzt und so im Abgas enthaltenes NOₓ zu N₂ reduziert. Als Reduktionsmittel kann Ammoniak verwendet werden, aus Gründen der Handhabbarkeit wird üblicherweise eine wässrige Lösung von Harnstoff eingesetzt (z. B. DE 44 36 415 A).

Beim Harnstoff SCR-System wird vom Steuergerät der Dieselbrennkraftmaschine fortlaufend die Sollmenge der Reduktionsmitteldosierung berechnet. Dazu benötigt das Steuergerät den momentanen Katalysatorwirkungsgrad. Dieser wird aus Betriebsparametern und der Katalysatortemperatur bestimmt. Die Katalysatortemperatur wiederum kann beispielsweise durch eine Modellrechnung aus der Abgastemperatur und dem Abgasmassenstrom ermittelt werden.

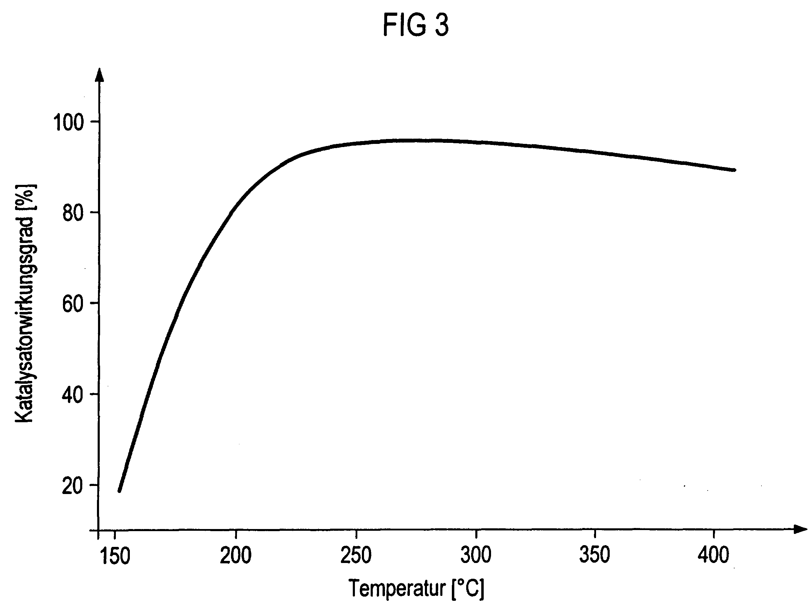

Die Wirksamkeit der Abgasbehandlung hängt von der Katalysatortemperatur ab. Fig. 3 zeigt einen typischen Verlauf des Katalysatorwirkungsgrades als Funktion der Katalysatortemperatur. Im Temperaturbereich um 250°C wird der Katalysatorwirkungsgrad, mit dem die NO_{X}-Reduktion erfolgt, maximal und fällt zu niedrigeren Temperaturen hin steil ab. Der Katalysatorwirkungsgrad geht bei Temperaturen unterhalb 120°C gegen Null. Bei der Verwendung von wässeriger Harnstofflösung als Reduktionsmittel darf die Dosierung nur erfolgen, wenn die Abgastemperatur für die Zersetzung von Harnstoff zur Bildung des für die katalytische Umwandlung nötigen Ammoniaks hoch genug ist. Die Zersetzung von Harnstoff wird katalytisch unterstützt und beginnt bei Temperaturen über 130°C. Niedrigere Temperaturen bedeuten also, daß erstens kein Reduktionsmittel dosiert werden kann und zweitens der Katalysator wirkungslos ist.

Die katalytische Abgasbehandlung bei einer Dieselbrennkraftmaschine, speziell zur NO_{X}-Reduktion, ist unmittelbar nach dem Kaltstart unwirksam. Erst mit steigender Abgastemperatur setzt die katalytische Reaktion ein. Im schubbetrieb kühlt das Abgas relativ schnell wieder ab, so daß z.B. beim Beschleunigen eines Fahrzeuges nach Gefällstrecken die katalytische NO_{X}-Reduktion nahezu unwirksam ist, was einen unerwünscht hohen NO_{X}-Ausstoß zur Folge hat.

Es ist somit Aufgabe der vorliegenden Erfindung, ein Verfahren zur Verringerung des NO_{X}-Gehaltes im Abgas einer Dieselbrennkraftmaschine mit Abgasnachbehandlung nach dem SCR-Prinzip anzugeben, das bei zu niedrigen Katalysatortemperaturen den Katalysatorwirkungsgrad schneller erhöht.

Die genannte Aufgabe wird mit den Merkmalen des Patentanspruchs 1 gelöst. Vorteilhafte Weiterbildungen sind in den Unteransprüchen gekennzeichnet.

Aus Motordaten, wie Luftmasse, Betriebstemperatur oder Last wird der Katalysatorwirkungsgrad berechnet. Beim SCR-Prinzip sind diese Berechnungen zur Reduktionsmittelzuführung erforderlich. Unter Berücksichtigung dieses Katalysatorwirkungsgrades kann durch Eingriff in die Steuerungsparameter, insbesondere Einspritzbeginn, Einspritzverlauf, Abgasrückführrate oder Ventilsteuerung, der NO_{X}-Ausstoß zu Lasten der Verbrauchsminimierung reduziert werden. Durch den Eingriff in die Steuerungsparameter wird zum einen der NO_{X}-Gehalt im unbehandelten Abgas verringert und zum anderen durch die Reduzierung des Wirkungsgrades der Dieselbrennkraftmaschine die Abgastemperatur schneller erhöht, was wiederum den Katalysatorwirkungsgrad steigert. Der geringere Wirkungsgrad bei kalter Brennkraftmaschine kann akzeptiert werden, da aus Komfortgründen ohnehin Maßnahmen für eine schnelle Erwärmung der Brennkraftmaschine gefordert werden.

Bei Otto-Motoren ist es aus 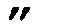 Bewertung der stöchiometrischen Benzindirekteinspritzer-Motorentechnologie", AVL-Tagung Motor und Umwelt, 1997, S. 106 f. bekannt, den Einspritzzeitpunkt auf Kosten von Kraftstoffmehrverbrauch zu verzögern, um die Stickoxidemissionen zu reduzieren.

Im folgenden wird die Erfindung anhand der Zeichnung näher beschrieben. Die Zeichnung zeigt:
- Fig. 1: eine schematische Darstellung einer Dieselbrennkraftmaschine mit katalytischer Nachbehandlung des Abgases nach dem SCR-Prinzip,
- Fig. 2: ein Diagramm mit dem zeitlichen Verlauf der Katalysatortemperatur bei einem Testfahrzeug, das einen bestimmten Geschwindigkeitsverlauf durchfährt und
- Fig. 3: einen Verlauf des Kataylsatorwirkungsgrades als Funktion der Katalysatortemperatur.

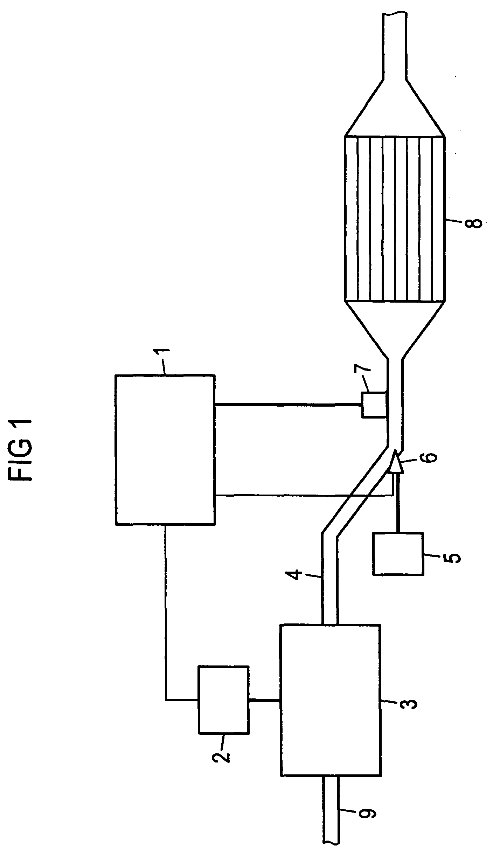

In Fig. 1 ist eine Dieselbrennkraftmaschine 3 dargestellt. Die Dieselbrennkraftmaschine 3 weist einen Ansaugtrakt 9, eine Einspritzanlage 2 und einen Abgastrakt 4 auf. Im Abgastrakt 4 ist ein Katalysator 8, der nach dem SCR-Prinzip arbeitet, angeordnet. Diesem Katalysator 8 ist eine Dosiereinrichtung, bestehend aus einer Reduktionsmittelzufuhr 5 und einem Dosierventil 6, vorgelagert. Aus der Reduktionsmittelzufuhr 5 wird über das Dosierventil 6 Harnstoff als Reduktionsmittel in das Abgas stromauf des Katalysators 8 eingespritzt. Das Dosierventil 6 wird über nicht näher bezeichnete Leitungen von einem Steuergerät 1 angesteuert. Zur Überwachung und Steuerung der Reduktionsmitteldosierung ist ein Sensor 7 vorgesehen, der die Verdampfungswärme des eingespritzten Reduktionsmittels mißt. Das Steuergerät 1 der Dieselbrennkraftmaschine 3 steuert über nicht bezeichnete Leitungen die Einspritzanlage 2. Weiter verfügt die Dieselbrennkraftmaschine 3 über ein System zur Abgasrückführung sowie eine Abschaltung der Kraftstoffzufuhr im Schubbetrieb (nicht dargestellt).

Das Steuergerät 1 bestimmt den Katalysatorwirkungsgrad und den NO_{X}-Gehalt im unbehandelten Abgas der Dieselbrennkraftmaschine 3 wie folgt:
- Einem Kennfeld wird abhängig von Abgastemperatur und Abgasmenge vor dem Katalysator der Katalysatorwirkungsgrad entnommen. Dazu wird die Abgasmenge aus der Ansaugluftmasse bestimmt; sie kann aber auch aus Drehzahl, Ansaugdruck bzw. Ladedruck und Kraftstoffmasse ermittelt werden.
- Ein weiteres Kennfeld liefert den NO_{X}-Gehalt im unbehandelten Abgas.

Ausgehend von diesen Werten ergreift das Steuergerät bei zu hohem NO_{X}-Ausstoß zwei Maßnahmen:
- Durch Eingriff in die Steuerungsparameter für Einspritzbeginn, Abgasrückführrate, Schubabschaltung, Leerlaufdrehzahl, usw. wird der NO_{X}-Gehalt im unbehandelten Abgas an den momentanen Katalysatorwirkungsgrad angepaßt, d.h. trotz eingeschränkter oder fehlender NO_{X}-Reduktion wird eine überhöhter Schadstoffausstoß vermieden. Einzeln oder als Kombination kann der Einspritzbeginn verzögert, die Abgasrückführrate erhöht, die Schubabschaltung deaktiviert oder die Leerlaufdrehzahl angehoben werden.
- Durch Veränderung der Steuerungsparameter wird die Abgastemperatur z.B. durch verzögertem Einspritzbeginn erhöht, um den Katalysator nach einem Kaltstart möglichst schnell auf Betriebstemperatur zu bringen bzw. ein zu starkes Abkühlen z.B. in Schubphasen zu verhindern.

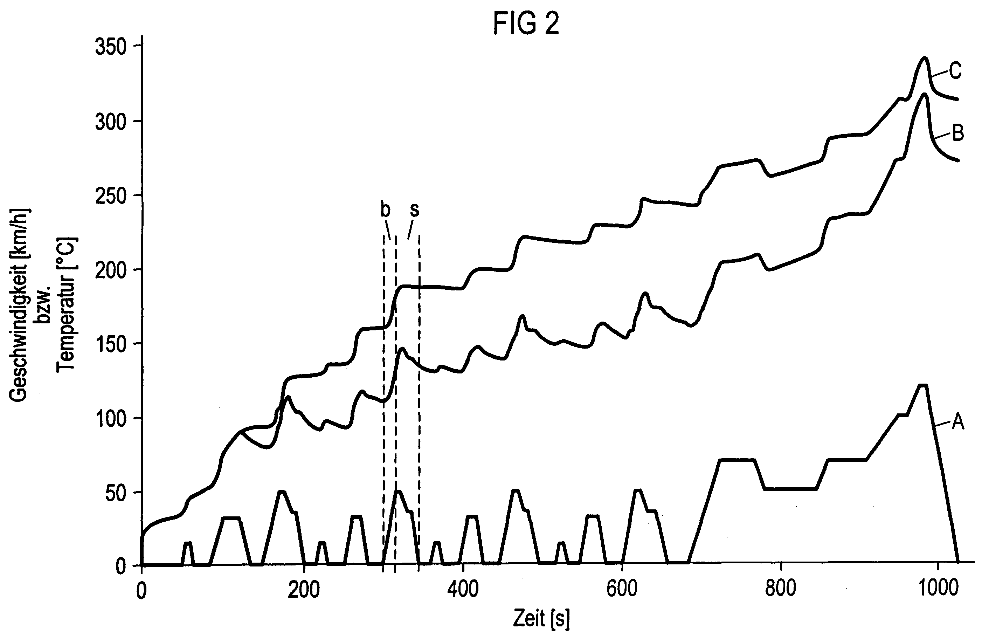

Die Auswirkung dieser Maßnahmen sind in Fig. 2 veranschaulicht. Kurve A zeigt den zeitlichen, von einer Prüfvorschrift (MVEG-Testzyklus) vorgegebenen Geschwindigkeitsverlauf, mit dem ein Testfahrzeug nach einem Kaltstart fährt. Kurve B zeigt den zeitlichen Verlauf der Katalysatortemperatur bei einer Abgasnachbehandlung nach dem Stand der Technik. Kurve C zeigt den zeitlichen Verlauf der Katalysatortemperatur beim erfindungsgemäßen Verfahren zur Verringerung des NO_{X}-Gehaltes.

Der Geschwindigkeitsverlauf des MVEG-Testzyklus ist wie folgt: Zuerst wird ein für den Stadtverkehr typisches Geschwindigkeitsprofil mit mehrmaligem Beschleunigen, Abbremsen und Stillstand durchfahren. Eine beispielhafte Beschleunigungsphase ist mit b, eine Schubphase mit s bezeichnet. Nach 700 Sekunden wird mit höheren Geschwindigkeiten gefahren.

Kurve B zeigt den Verlauf der Katalysatortemperatur, die wie aus Fig. 3 bekannt mit dem Katalysatorwirkungsgrad verknüpft ist, bei einem Katalysator nach SCR-Prinzip. Es ist deutlich zu sehen, daß in Phasen des Abbremsens bzw. bei Stillstand des Testfahrzeuges die Temperatur abfällt. Das heißt, der Wirkungsgrad der katalytischen Nachbehandlung fällt ebenso, womit eine ansteigender NO_{X}-Gehalt im behandelten Abgas einhergeht. Die Temperatur, bei der mit der Reduktionsmittelzugabe nach dem SCR-Prinzip begonnen werden kann, wird erst nach 300 Sekunden dauerhaft überschritten.

Kurve C zeigt den Verlauf der Katalysatortemperatur nach einem Kaltstart beim erfindungsgemäßen Verfahren. Es wurden folgenden Eingriffe in die Steuerungsparameter durchgeführt:
- In den Beschleunigungsphasen b wurde der Spritzbeginn gegenüber der üblicherweise verbrauchsoptimierten Abstimmung verzögert, was aufgrund der heißeren Abgase die Erwärmung des Katalysators beschleunigt. Dies resultiert in einem steileren Verlauf der Kurve C verglichen mit B. Zusätzlich ergibt sich durch den späteren Einspritzbeginn ein geringerer NO_{X}-Gehalt im unbehandelten Abgas.
- In Schubphasen s wird die Schubabschaltung deaktiviert, wodurch die in Kurve A erkennbaren Abkühlphasen vermieden werden und ein höheres Temperaturniveau viel schneller erreicht wird.

Schon nach weniger als 180 Sekunden wird mit 120° die Temperatur überschritten, bei der mit der Reduktionsmittelzugabe nach dem SCR-Prinzip begonnen werden kann.

Die eingeleiteten Maßnahmen haben prinzipiell einen Kraftstoffmehrverbrauch zur Folge. Da sie aber nur bei unzureichender Katalysatortemperatur eingeleitet werden, was nur in Betriebsphasen mit geringer Motorlast und nach Kaltstart notwendig ist, ist dieser Mehrverbrauch im praktischen Fahrbetrieb sehr gering. Da ein schnelleres Aufheizen der Brennkraftmaschine aus Komfortgründen ohnehin erwünscht ist, kann dieser unwesentliche Mehrverbrauch akzeptiert werden.

## Patentansprüche

1. Verfahren zur Verringerung des NO_{X}-Gehaltes im Abgas einer Dieselbrennkraftmaschine, mit einem Katalysator zur katalytischen Nachbehandlung des Abgases nach dem SCR-Prinzip, wobei dem Abgas stromauf des Katalysators ein Reduktionsmittel zugeführt wird, und mit einem Steuergerät, das Steuerungsparameter der Dieselbrennkraftmaschine, insbesondere den Einspritzbeginn des Kraftstoffes, die Leerlaufdrehzahl sowie den jeweiligen Katalysatorwirkungsgrad bestimmt und abhängig vom Katalysatorwirkungsgrad den Sollwert für die Reduktionsmittelzuführung berechnet, dadurch gekennzeichnet, daß bei Unterschreiten eines vorbestimmten Wertes für den Katalysatorwirkungsgrad abhängig vom Wert des Katalysatorwirkungsgrades vom Steuergerät (1) die Steuerungsparameter der Dieselbrennkraftmaschine so verändert werden, daß der NO_{X}-Gehalt im unbehandelten Abgas verringert und die Abgastemperatur erhöht wird.

2. Verfahren nach Anspruch 1, dadurch gekennzeichnet, daß bei Unterschreiten des vorbestimmten Wertes der Einspritzzeitpunkt des Kraftstoffes verzögert wird.

3. Verfahren nach Anspruch 1 oder 2, dadurch gekennzeichnet, daß bei Unterschreiten des vorbestimmten Wertes die Leerlaufdrehzahl angehoben wird.

4. Verfahren nach einem der Ansprüche 1 bis 3, für eine Dieselbrennkraftmaschine mit Abschaltung der Kraftstoffzufuhr im Schubbetrieb, dadurch gekennzeichnet, daß bei Unterschreiten des vorbestimmten Wertes die Schubabschaltung deaktiviert wird.

5. Verfahren nach einem der Ansprüche 1 bis 4, für eine Dieselbrennkraftmaschine mit Abgasrückführung, dadurch gekennzeichnet, daß bei Unterschreiten des vorbestimmten Wertes die Abgasrückführungsrate erhöht wird.

6. Verfahren nach einem der Ansprüche 1 bis 5, dadurch gekennzeichnet, daß der Katalysatorwirkungsgrad aus Steuerungsparametern, insbesondere des Abgasmassenstroms, und der gemessenen Abgastemperatur bestimmt wird.

7. Verfahren nach Anspruch 6, dadurch gekennzeichnet, daß der Abgasmassenstrom durch eine Modellrechnung mit Hilfe der Motordrehzahl und dem Ansaugdruck oder Ladedruck ermittelt wird.
